# EUROPEAN PATENT SPECIFICATION

(11) **EP 0 789 334 B1**
(45) Date of publication and mention of the grant of the patent: **17.04.2002**
(21) Application number: 97400157.0
(22) Date of filing: 23.01.1997
(51) Int. Cl.: G07C 9/00, G06K 9/20

(54) **Integrated circuit device having an opening exposing the integrated circuit die and related methods**
Integrierte Schaltungsanordnung mit einer den integrierten Schaltbaustein offenlegenden Öffnung und entsprechende Verfahren
Dispositif de circuit intégré à ouverture exposant une puce de circuit intégré et procédés associés

(30) Priority: 26.01.1996 US 592472; 27.06.1996 US 671430
(43) Date of publication of application: 13.08.1997
(73) Proprietor: HARRIS CORPORATION, Melbourne Florida 32919 (US)
(72) Inventor: Salatino, Matthew M., Satellite Beach, Florida 32937 (US); Studebaker, S. James, Palm Bay, Florida 32905 (US)
(74) Representative: Ballot, Paul

(56) References cited:
- WO-A-94/25938
- JP-A- 62 241 344
- US-A- 3 781 855
- US-A- 5 207 102
- PATENT ABSTRACTS OF JAPAN vol. 018, no. 340 (E-1569), 27 June 1994 & JP 06 085222 A (SHARP CORP), 25 March 1994

## Description

The present invention relates to the field of semiconductors, and in particular, to an integrated circuit device and package therefor.

Several applications may require that the outermost surface of an integrated circuit die be exposed to the environment, such as to be accessible for direct contact with a person or part of a person. For example, certain medical applications position a bare integrated circuit into the blood stream, such as to measure blood chemistry. Fortunately, in such an application the circuit's operational life is limited, and the circuit is used only once before being discarded. Accordingly, long term reliability is not typically a significant issue.

In contrast, a fingerprint sensor based upon an integrated circuit array of sensing elements may require direct contact by the finger with the integrated circuit die. Fingerprint sensing and matching is a reliable and widely used technique for personal identification or verification.

A typical electronic fingerprint sensor is based upon illuminating the finger surface using visible light, infrared light, or ultrasonic radiation. The reflected energy is captured with some form of camera, for example, and the resulting image is framed, digitized and stored as a static digital image. For example, the specification of U.S. Patent No. 4,210,899 discloses an optical scanning fingerprint reader cooperating with a central processing station for a secure access application, such as admitting a person to a location or providing access to a computer terminal. The specification of U.S. Patent No. 4,525,859 discloses a video camera for capturing a fingerprint image and uses the minutiae of the fingerprints, that is, the branches and endings of the fingerprint ridges, to determine a match with a database of reference fingerprints.

The specification of U.S. Patent No. 4,353,056 discloses another approach to sensing a live fingerprint.

The specification of U.S. Patent No. 5,325,442 discloses a fingerprint sensor including a plurality of sensing electrodes.

Document US-A-3 781 855 discloses a fingerprint sensor device as defined in the preamble portion of claim 1. The sensor is mounted on the base of a laterally recessed portion of the body of the device, so that it is surrounded on three sides by cavity walls.

Document US-A-5 207 102 discloses a semiconductor pressure sensor which is integrally encapsulated, except for a sensing diaphragm on a top surface.

Document US JP-A-622 41344 discloses a resin-sealed packaged semiconductor device in which the encapsulation comprises an opening for exhausting gas.

Document WO-A-9425938 discloses a portable card-based fingerprint sensor provided with a memory and processor, the card being insertable in a reader having an opening allowing access to the sensor.

Greater advances in fingerprint sensing and matching for identification and verification are desirable to allow unauthorized use of computer workstations, appliances, vehicles, and confidential data.

An object of the invention is to provide an integrated circuit device and related methods permitting direct contact of the integrated circuit die by the sensed medium, such as the finger of a user, to provide a reliable environmental seal for the die.

Another object is to provide such an integrated circuit device and related methods which facilitate large scale and relatively low cost manufacturing.

The present invention includes an integrated circuit device as defined in claim 1.

The invention also includes a method for making this device comprising the steps defined in claim 27.

Advantageously, the electrically conductive member may be adhesively secured to the integrated circuit die. Accordingly, the electrically conductive member, and adhesive may serve to seal the interface between the body of encapsulating material and the die. The electrically conductive member may define a frame that surrounds a body of the removable material during an intermediate stage in manufacturing. More particularly, the body of removable material and its frame may be positioned on the integrated circuit die while plastic is injection molded to encapsulate the assembly. The body of removable material may then be removed thereby forming the opening in the body of encapsulating material and leaving the electrically conductive frame secured to the surrounding body of encapsulating material. In this embodiment, the electrically conductive member defines a frame during manufacturing and facilitates formation of the opening to expose the adjacent portion of the integrated circuit die. The electrically conductive member may also be part of the circuitry of the integrated circuit device.

The integrated circuit device may preferably include interconnection means for electrically connecting the electrically conductive member to the integrated circuit die. For example, the interconnection means may include an electrically conductive adhesive between the electrically conductive member and the integrated circuit die, and at least one conductor filled via in the integrated circuit die.

Conveniently, in the fingerprint sensing embodiment of the invention, the integrated circuit die comprises an electric field fingerprint sensor. More particularly, the electric field fingerprint sensor may preferably comprise an array of electric field sensing electrodes, a dielectric layer adjacent the electric field sensing electrodes, and drive means for applying an electric field drive signal to the electric field sensing electrodes and adjacent portions of the finger so that the electric field sensing electrodes produce a fingerprint image signal. Accordingly, the electrically conductive member may serve as an electrode for the fingerprint sensing portion.

Another aspect of the present invention is based upon the user contacting the integrated circuit device, such as to sense a fingerprint. Since the electrically conductive member is contacted by the finger of the user, voltage clamping means is preferably operatively connected to the electrically conductive member for clamping a voltage thereof to remove electrostatic buildup to thereby protect the integrated circuit device from electrostatic discharge damage and/or to protect the user from electrical shock when contacting the integrated circuit device.

Specifically, the integrated circuit die preferably further comprises a plurality of bond pads. Accordingly, the body of encapsulating material preferably covers the plurality of bond pads. In addition, bond pad sealing means may be provided for protecting the plurality of bond pads from corrosion. Each of the bond pads may comprise a first metal layer, such as comprising aluminum. Accordingly, the bond pad sealing means may comprise a barrier metal layer on the first metal layer. The bond pad sealing means may further comprises a layer of gold on the barrier metal layer. The bond pad sealing means may be used with the electrically conductive member providing a frame and sealing the interface with the die. Alternatively, in some embodiments the bond pad sealing means may be used without the electrically conductive member or frame member.

Suitably, the body of encapsulating material preferably comprises injection molded plastic. Locking means is preferably defined at an interface between the electrically conductive member or frame member and the body of encapsulating material for forming a mechanical lock therebetween. Corrosion sensing means may be associated with the integrated circuit die to provide a further backup to ensure reliability such as by indicating the integrated circuit's feasible end of life. The integrated circuit device may also comprise a lead frame connected to the integrated circuit die. In addition, the electrically conductive member may comprise a metal, such as gold, for example. The integrated circuit die preferably comprises a robust outermost passivating layer of at least one of a nitride, carbide, or diamond, for example.

Another aspect of the invention is that the integrated circuit die may comprise a relatively rigid substrate, such as a silicon substrate, and a plurality of metal layers on the substrate. The metal layers are preferably relatively thin and relatively rigid to provide additional strength to the integrated circuit die, since the die is typically touched by the user. Preferably each of the plurality of metal layers comprises a refractory metal, such as tungsten, molybdenum, or titanium. Considered another way, according to this aspect of the invention each of the plurality of metal layers is preferably devoid of relatively soft aluminum.

Preferably, a method is for making an integrated circuit device. The method preferably comprises the steps of: providing an integrated circuit die; positioning a body of removable material on the integrated circuit die; forming a body of encapsulating material around the integrated circuit die and the body of removable material; and removing the body of removable material to define an opening through the body of encapsulating material to expose a portion of the integrated circuit die. The integrated circuit die is a fingerprint sensor.

The method may further comprise the step of securing a frame member to the body of removable material. The frame member comprises electrically conductive material. In addition, the step of removing the body of removable material preferably includes removing same while the frame member remains in place with the body of encapsulating material. The step of positioning the body of removable material preferably includes the step of adhesively securing the frame member to the integrated circuit die. The step of forming the body of encapsulating material may include injection molding plastic around the body of removable material and the integrated circuit die. In addition, the body of removable material may preferably be a body of material soluble in liquid, and wherein the step of removing preferably includes exposing the body of material to the liquid solvent.

Another method aspect of the invention is for making an integrated circuit device comprising the steps of: providing an integrated circuit die; positioning a mold having a body and a protrusion extending outwardly therefrom on the integrated circuit die so that the protrusion contacts a portion of the integrated circuit die; and positioning encapsulating material within the mold and surrounding the integrated circuit die. The method also preferably includes the step of removing the mold including the protrusion to define an opening through the body of encapsulating material to thereby expose a portion of the integrated circuit die.

The invention will now be described, by way of example, with reference to the accompanying drawings in which:
FIG. 1 is a schematic diagram of an integrated circuit fingerprint sensor in combination with a notebook computer;
FIG. 2 is a schematic diagram of an integrated circuit fingerprint sensor in combination with a computer workstation and associated information processing computer and local area network (LAN);
FIG. 3 is a schematic perspective view of an embodiment of an integrated circuit fingerprint sensor;
FIG. 4 is a schematic plan view of a portion of the integrated circuit fingerprint sensor and an overlying fingerprint pattern with a portion thereof greatly enlarged;
FIG. 5 is a greatly enlarged plan view of a portion of the integrated circuit fingerprint sensor with the upper dielectric layer removed therefrom;
FIG. 6 is a schematic perspective view of a portion of the integrated circuit fingerprint sensor;
FIG. 7 is a schematic fragmentary view of a portion of the integrated fingerprint sensor;
FIG. 8 is a schematic side view, partially in section, illustrating the electric fields;
FIG. 9 is a schematic circuit diagram of a portion of the integrated fingerprint sensor;
FIG. 10 is an enlarged schematic side view, partially in section, further illustrating the electric fields;
FIG. 11 is a slightly enlarged schematic cross-sectional view taken along lines 11-11 of FIG. 3.
FIG. 12 is a greatly enlarged schematic cross-sectional view of a portion of an alternate embodiment of an integrated circuit device;
FIG. 13 is a greatly enlarged schematic cross-sectional view of a contact pad portion in an embodiment of the integrated circuit device;
FIG. 14 is a greatly enlarged schematic cross-sectional view of a portion of an alternate embodiment of an integrated circuit device;
FIG. 15 is a plan view of an integrated circuit fingerprint sensing device incorporated into a carrying card;
FIGS. 16-18 are schematic cross-sectional views of the integrated circuit device during manufacturing;
FIGS. 19 and 20 are schematic cross-sectional views of the integrated circuit device during another manufacturing process.

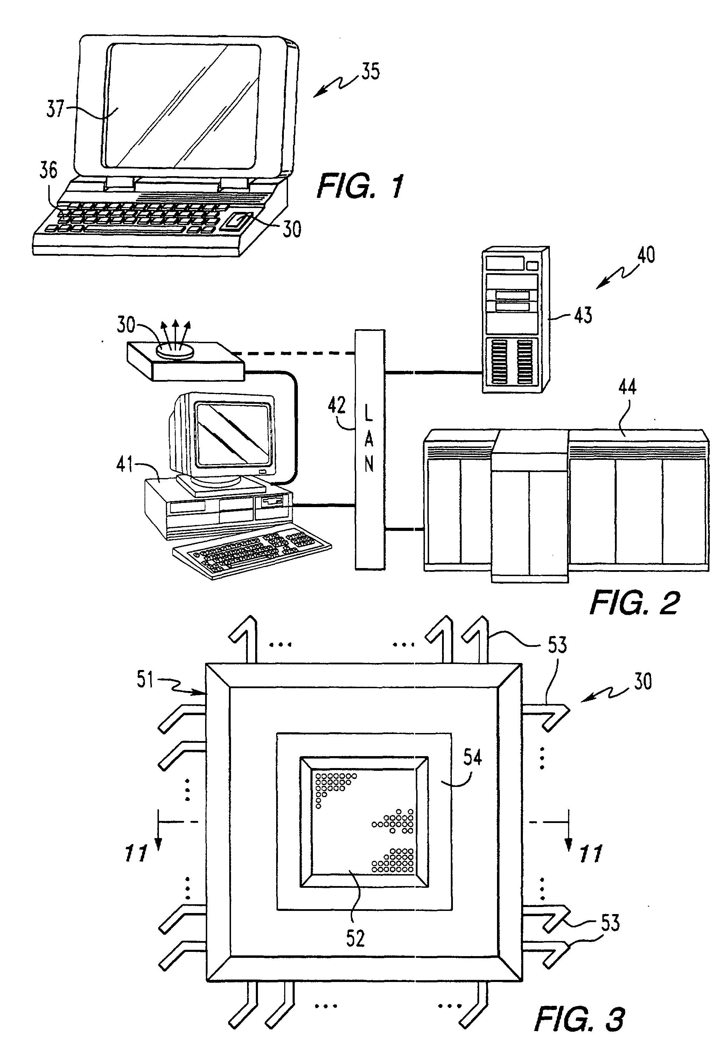

FIGS. 1-3 illustrate an integrated circuit fingerprint sensor **30** in accordance with the invention is initially described. The illustrated fingerprint sensor **30** includes a housing or package **51**, a dielectric layer **52** exposed on an upper surface of the package which provides a placement surface for the finger, and a plurality of signal conductors or leads **53.** A conductive strip or electrode **54** around the periphery of the dielectric layer **52** may also provide a contact electrode for the finger as described in greater detail below. The sensor **30** may provide output signals in a range of sophistication levels depending on the level of processing incorporated in the package as also described in greater detail below.

The sensor **30** may be used to permit access to a computer workstation, such as a notebook computer **35** including a keyboard **36** and associated folding display screen **37** (FIG. 1). In other words, user access to the information and programs of the notebook computer **35** may only be granted if the desired or previously enrolled fingerprint is first sensed.

The sensor **30** may be used to grant or deny access to a fixed workstation **41** for a computer information system **40.** The system may include a plurality of such workstations **41** linked by a local area network (LAN) **43,** which in turn, is linked to a fingerprint identification server **43,** and an overall central computer **44.**

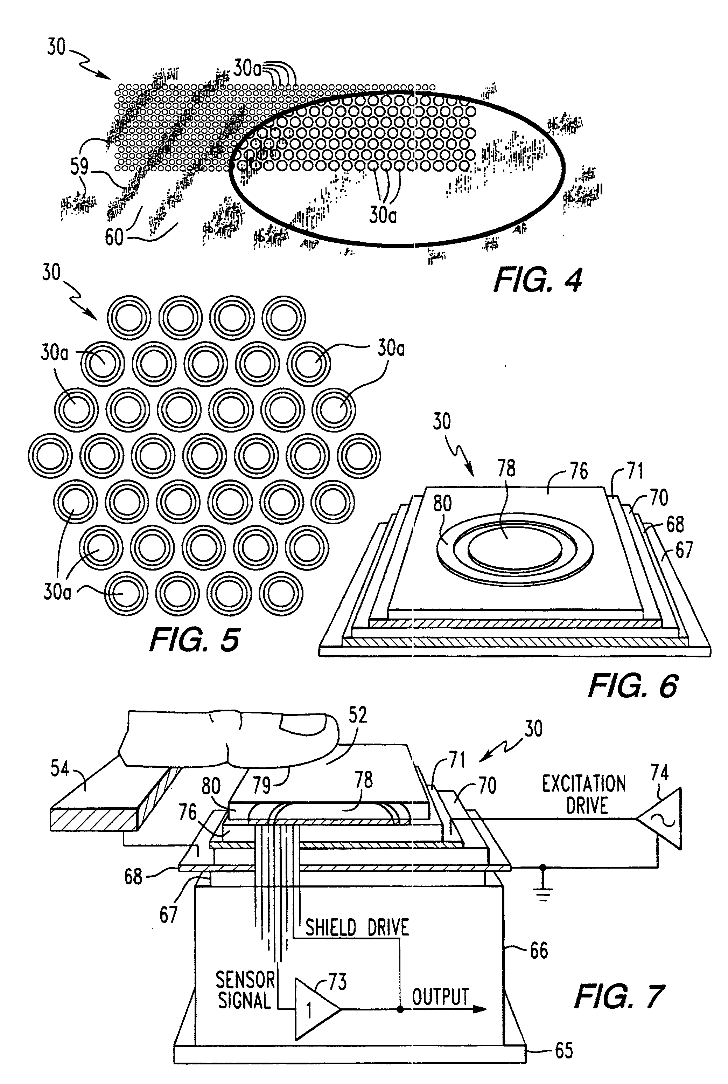

FIGS. 4-10 refer to the fingerprint sensor **30.** The fingerprint sensor **30** includes a plurality of individual pixels or sensing elements **30a** arranged in array pattern as shown perhaps best in FIGS. 4 and 5. As would be readily understood by those skilled in the art, these sensing elements are relatively small so as to be capable of sensing the ridges **59** and intervening valleys **60** of a typical fingerprint (FIG. 4). As will also be readily appreciatec by those skilled in the art, live fingerprint readings as from the electric field sensor **30** in accordance with the present invention may be more reliable than optical sensing, because the conduction of the skin of a finger in a pattern of ridges and valleys is extremely difficult to simulate with a fingerprint image on a substrate or even with a three-dimensional model of a fingerprint, for example.

The fingerprint sensor **30** includes a substrate **65,** and one or more active semiconductive layers **66** thereon. In the illustrated embodiment a ground plane electrode layer **68** is above the active layer **66** and separated therefrom by an insulating layer **67.** A drive electrode layer **71** is positioned over another dielectric layer **70** and is connected to an excitation drive amplifier **74.** The excitation drive signal may be typically in the range of about 1 Khz to 1 Mhz and is coherently delivered across all of the array. Accordingly, the drive or excitation electronics are thus relatively uncomplicated and the overall cost of the sensor **30** may be reduced, while the reliability is increased.

Another insulating layer **76** is on the drive electrode layer **71,** and an illustratively circularly shaped sensing electrode **78** is on the insulating layer **76.** The sensing electrode **78** may be connected to sensing electronics **73** formed in the active layer **66** as schematically illustrated, and as would be readily appreciated by those skilled in the art.

An annularly shaped shield electrode **80** surrounds the sensing electrode **78** in spaced relation therefrom. As would be readily appreciated by those skilled in the art the sensing electrode **78** and its surrounding shield electrode **80** may have other shapes, such as hexagonal, for example, to facilitate a close packed arrangement or array of pixels or sensing elements **30a.** The shield electrode **80** is an active shield which is driven by a portion of the output of the amplifier circuit **73** to help focus the electric field energy and, moreover, to thereby reduce the need to drive adjacent electrodes. Accordingly, the sensor **30** permits all of the sensing elements to be driven by a coherent drive signal in sharp contrast to prior art sensors which required that each sensing electrode be individually driven.

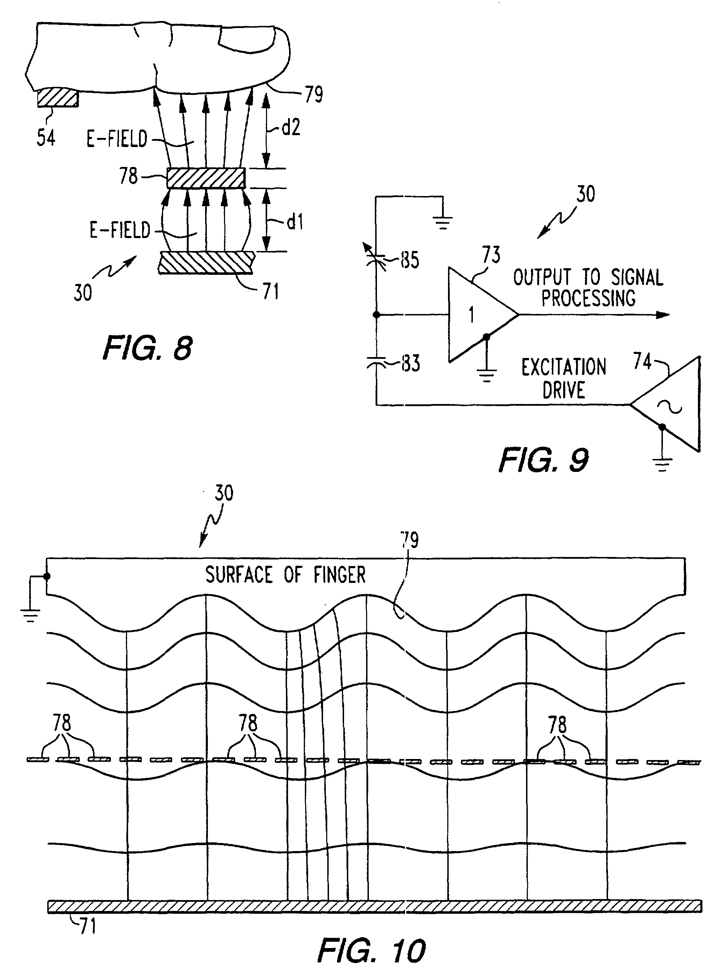

As understood with additional reference to FIGS. 8-10, the excitation electrode **71** generates a first electric field to the sensing electrode **78** and a second electric field between the sensing electrode **78** and the surface of the finger **79,** over the distances **d1** and **d2**, respectively. In other terms, a first capacitor **83** (FIG. 9) is defined between the excitation electrode **71** and the sensing electrode **78,** and a second capacitor **85** is defined between the finger skin **79** and ground. The capacitance of the second capacitor **85** varies depending on whether the sensing electrode **78** is adjacent a fingerprint ridge or valley. Accordingly, the sensor **30** can be modeled as a capacitive voltage divider. The voltage sensed by the unity gain voltage follower or amplifier **73** will change as the distance **d2** changes.

In general, the sensing elements **30a** operate at very low currents and at very high impedances. For example, the output signal from each sensing electrode **78** is desirably about 5 to 10 millivolts to reduce the effects of noise and permit further processing of the signals. The approximate diameter of each sensing element **30a**, as defined by the outer dimensions of the shield electrode **80,** may be about 0.002 to 0.005 inches in diameter. The excitation dielectric layer **76** and surface dielectric layer **52** may desirably have a thickness in the range of about 1 µm. The ground plane electrode **68** shields the active electronic devices from the excitation electrode **71**. A relatively thick dielectric layer **67** will reduce the capacitance between these two structures and thereby reduce the current needed to drive the excitation electrode. The various signal feedthrough conductors for the electrodes **78, 80** to the active electronic circuitry may be readily formed as would be understood by those skilled in the art.

The overall contact or sensing surface for the sensor **30** may desirably be about 0.5 by 0.5 inches (1 inch = 2.54 cm) -- a size which may be readily manufactured and still provide a sufficiently large surface for accurate fingerprint sensing and identification. The sensor **30** in accordance with the invention is also fairly tolerant of dead pixels or sensing elements **30a.** A typical sensor **30** includes an array of about 256 by 256 pixels or sensor elements, although other array sizes are also contemplated by the present invention. The sensor **30** may also be fabricated at one time using primarily conventional semiconductor manufacturing techniques to thereby significantly reduce the manufacturing costs.

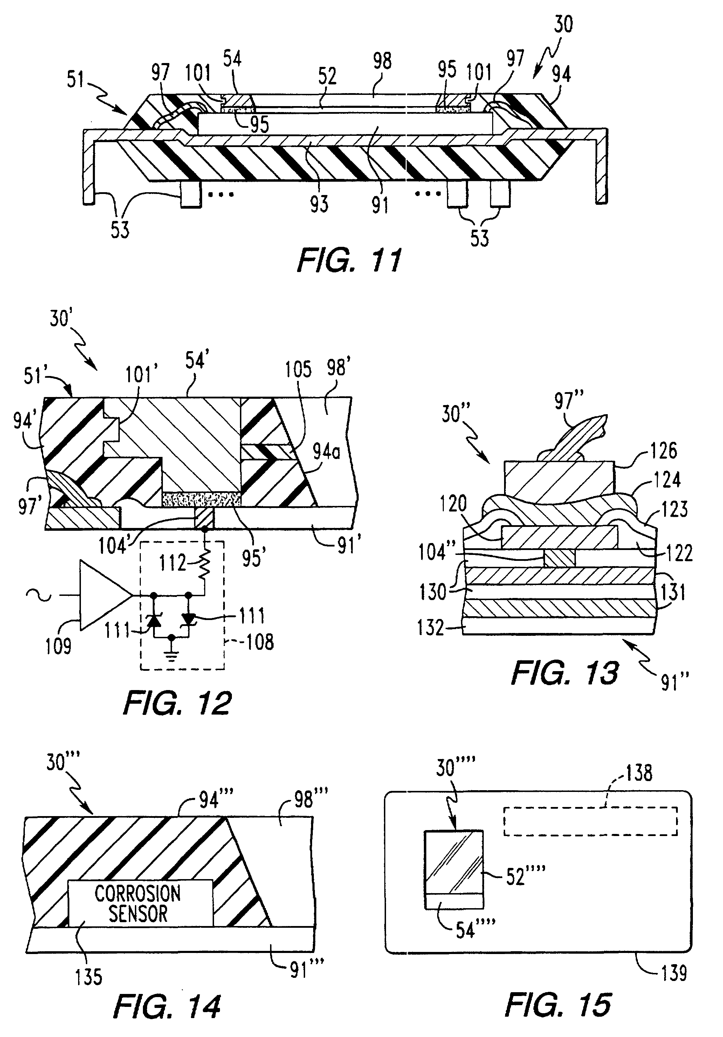

Turning now additionally to FIG. 11 the packaging of the fingerprint sensor **30** is further described. As would be readily urderstood by those skilled in the art, an integrated circuit fingerprint sensor presents a special packaging difficulty since it has to be touched by the finger being scanned or sensed. It is typically desired to avoid touching of an integrated circuit in conventional integrated circuit fabrication, in part, because of potential contamination. The main contaminants of concern may be sodium and the other alkaline metals. These ionic contaminants have very high mobility in the SiO₂ layers that are typically used to passivate the integrated circuit. The resulting oxide charge may degrade device characteristics especially in MOS technology.

One conventional approach to controlling mobile ionic contamination uses hermetic packaging with a phosphorus-doped passivation layer over the integrated circuit. The phosphorus doping reduces contaminant mobility by trapping mechanisms as would be readily understood by those skilled in the art. Plastic packaging has now become more widespread, and a silicon nitride or silicon carbide passivation layer may be used with the plastic packaging. Silicon nitride or silicon carbide may greatly reduce the permeability to contaminants to permit direct contact between the finger of the user and the integrated circuit. Accordingly, silicon nitride or silicon carbide may preferably be used as ar outermost passivation layer of the fingerprint sensor **30** in accordance with an embodiment of the present invention.

The fingerprint sensor **30,** also raises several unique packaging requirements including: the package needs to be open to enable finger-to-sensor die contact; the package should be physically strong in order to withstand rough use; the package and die should be able to withstand repeated cleaning with detergent and/or disinfectant solutions, and including scrubbing; the die should be able to withstand contact with a wide variety of organic and inorganic contaminants, and should be able to withstand abrasion; and finally the package should be relatively inexpensive.

The illustrated package **51** addresses these packaging issues. The package **51** includes an integrated circuit die **91** mounted on a lead frame **93** during injection molding to form the body **94** of encapsulating material of the package. Connections are made by bond wires **97** and the lead frame **93** to the outwardly extending leads **53.** The upper surface of the package **51** includes an integrally molded opening **98** which direct permits contact to the die **91.** More particularly, the opening **98** is defined in the illustrated embodiment by a frame member or electrically conductive member which serves as an electrode **54**. The electrode **54** is illustratively i connected to the underlying portion of the die **91** by an electrically conductive adhesive **95** which provides advantages in manufacturing of the sensor **30** as explained in greater detail below.

The inner exposed sides of the electrode **54** may be slightly angled. The frame member or electrode **54** is mechanically held in position within the body **94** of surrounding encapsulating material by an interlocking fit between a tongue of plastic material and a corresponding groove in the electrode. Of course, those of skill in the art will recognize other arrangements of interlocking means at the interface between the body **94** and the electrode **54.**

The electrode **54** may be advantageously interconnected to circuitry within the integrated circuit die **91.** In particular with reference additionally to FIG. 12, a conductor filled via **104** may be used to connect to the electrode **54'.** As also shown in FIG. 12, an alternate mechanical locking arrangement is illustrated at the interface between the body **94'** of encapsulating material and the electrode **54'.** The illustrated electrode **54'** has an L-shaped cross-section and those of skill in the art will readily appreciate that other cross-sectional shapes are possible and are contemplated by the present invention.

In addition, FIG. 12 illustrates an embodiment of the invention wherein the electrode **94'** is set back from the opening **98'.** More particularly, a strut **105** may be used to hold a body of removable material to form the opening during molding as described in greater detail below. In other words, one or more struts **105** may define a space between the frame member or electrode **54'** and the body of removable material during molding. Accordingly, an inner portion of plastic **94a** is formed interior of the electrode **54'** during injection molding.

FIG. 12 relates to clamping a voltage at the electrode **54'.** More particularly, an electrostatic voltage on the user's finger, if not properly dissipated, may damage components of the integrated circuit die **91'** as would be readily understood by those skilled in the art. In addition, a voltage imparted to the electrode **54'** from the drive circuitry **109** should desirably not exceed a predetermined level to avoid accidental shocking of the user. Accordingly, the invention advantageously includes the illustrated voltage clamping circuit **108** provided by the illustrated pair of zener diodes **111** and resistor **112**. In certain embodiments of the fingerprint sensor a ground electrode may not be necessary, as the body may serve as a large capacitor itself for the fingerprint sensor. However, the illustrated electrode **54'** may still advantageously provide a conductor for contacting the finger to dissipate static discharge in cooperation with the clamping circuit **109.**

Referring now additionally to FIG. 13 another aspect of the invention is explained. Additional bonding pad protection may be provided in certain embodiments of the invention. In the illustrated structure, a bonding pad **120** of aluminum, for example, is formed on an outer surface of the die. A first passivating layer **122** is formed over the upper die surface and covering edge portions of the bond pad **120.** A second and preferably thicker passivating layer **123** is applied over the first passivating layer **122.** A barrier metal layer **124** is formed on the opening in the second layer **123** and contacts the underlying aluminum bond pad **120.** The barrier metal may be an alloy comprising regions of titanium/tungsten; titanium/tungsten nitride; and titanium/tungsten to protect the underlying relatively corrosion susceptible aluminum. A gold layer **126** may be formed over the barrier metal layer **124,** and a bond wire **97"** connected thereto as would be readily appreciated by those skilled in the art. Those of skill in the art will also readily appreciate other similar structures for protecting the susceptible bond pads **120** from corrosion or degradation as when exposed to water or other contaminants.

The outer passivation layer **123** may comprise silicon nitride for the reasons highlighted above. In addition, another protective coating comprising an organic material, such as polyimide or PTFE (Teflon") may be provided which yields advantages in wear resistance and physical protection. Inorganic coatings, such as silicon carbide or amorphous diamond, may also be used for the outer layer **123** and may greatly enhance wear resistance, especially to abrasive particles. In addition, the material of the outer passivation layer **123** is preferably compatible with standard integrated circuit pattern definition methods in order to enable bond pad etching, for example.

Reference to FIG. 13 the integrated circuit die **91**" may include a plurality of metal layers **131** and intervening dielectric layers **130** supported on a relatively rigid silicon substrate **132.** Conventional annealed aluminum is typically relatively soft and is deposited with a relatively large thickness. The metal layers **131** may be provided by a refractory metal or alloys thereof which may be relatively thin and which are relatively rigid. For example, the refractory metal may include tungsten, molybdenum, titanium or alloys thereof. Other refractory metals, and other non-refractory metals may also be used as long as they are relatively rigid and may be formed in a relatively thin layer. For example, for CVD tungsten the thickness is preferably more than about 0.1 µm and preferably less than about 1.0 µm. Considered another way, the metal layers are preferably devoid of aluminum. Thus, the integrated circuit die **91"** is more robust to resist damage as may be caused by direct physical contact with a finger of the user, for example.

Those of skill in the art will readily appreciate that the bond pad sealing means disclosed herein and as illustrated in FIG. 13 may be advantageously used in combination with the interface sealing provided by the adhesively secured electrode **54.** The bond pad sealing means may also be used by itself in certain embodiments, such as shown in FIG. 14 wherein no electrode remains adjacent the opening **98"** for either the full extent of the interface or only a part thereof. As also illustrated in FIG. 14, corrosion sensing means **135** may be provided to enable control logic on the integrated circuit die **91**" or remote therefrom to detect corrosion, before failure of the bond pads or other portions of the encapsulated device. The corrosion sensing means **135** may be provided by a resistance network which is periodically monitored for a change in value as would be readily understood by those skilled in the art.

Another variation of the fingerprint sensor **30""** is illustrated in FIG. 15 wherein the integrated circuit die is encapsulated within plastic material defining a card **139** for carrying by the user. The illustrated sensor **30""** includes only a single electrode portion **54""** extending along only a portion of the generally rectangular opening. In other embodiments as discussed above, the electrode or frame member may define a closed geometric shape, such as a rectangle. The card **139** may include the illustrated magnetic stripe **138** for carrying data, for example, and which operates in conjunction with the fingerprint sensor **30""** as would also be readily understood by those skilled in the art. The card **139** may also carry one or more other integrated circuit dies to enable data processing and storage.

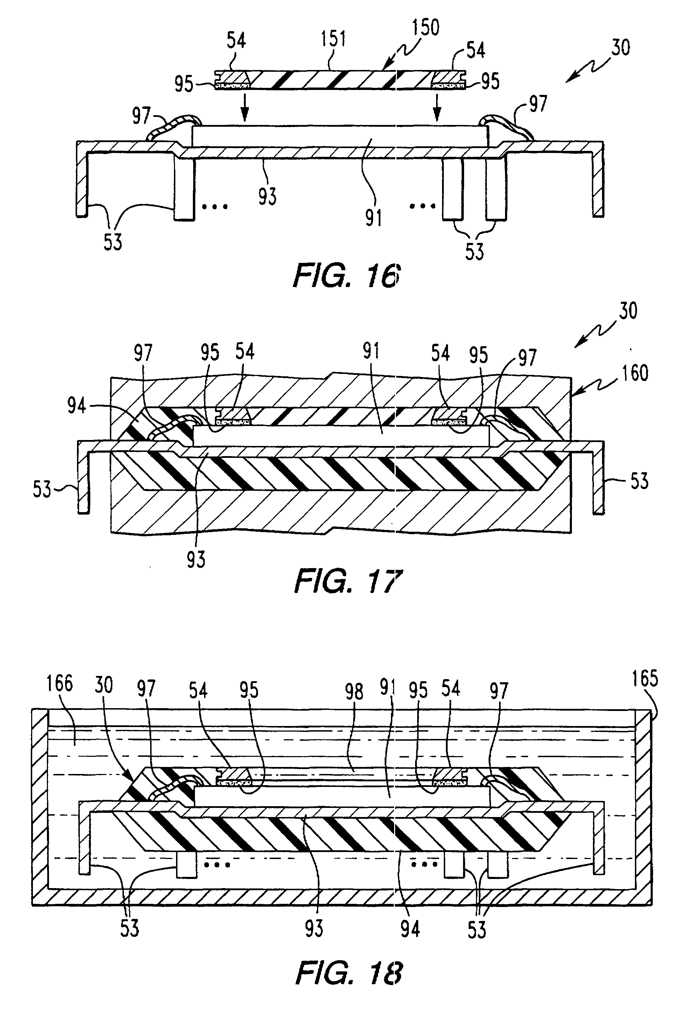

The method aspects of the invention are now explained with reference to FIGS. 16-18. As shown in FIG. 16, an assembly **150** including the electrode **54,** a body **151** of removable material, and an adhesive layer **95** on the underside of the electrode is aligned over and positioned onto the integrated circuit die **91** which, in turn, has been secured and connected to the lead frame **93.** The thus formed structure is positioned within a conventional integrated circuit package injection mold **160** (FIG. 17) and the body **94** of encapsulating plastic material is formed. As shown in FIG. 18, after removal from the injection mold **160,** the structure is positioned in a bath **165** containing a liquid solvent **166,** such as water, for example, so that the body of removable material is dissolved away leaving the opening **98** to the underlying portion of the integrated circuit die **91.** In addition, a solvent spray may be used to dissolve the removable material.

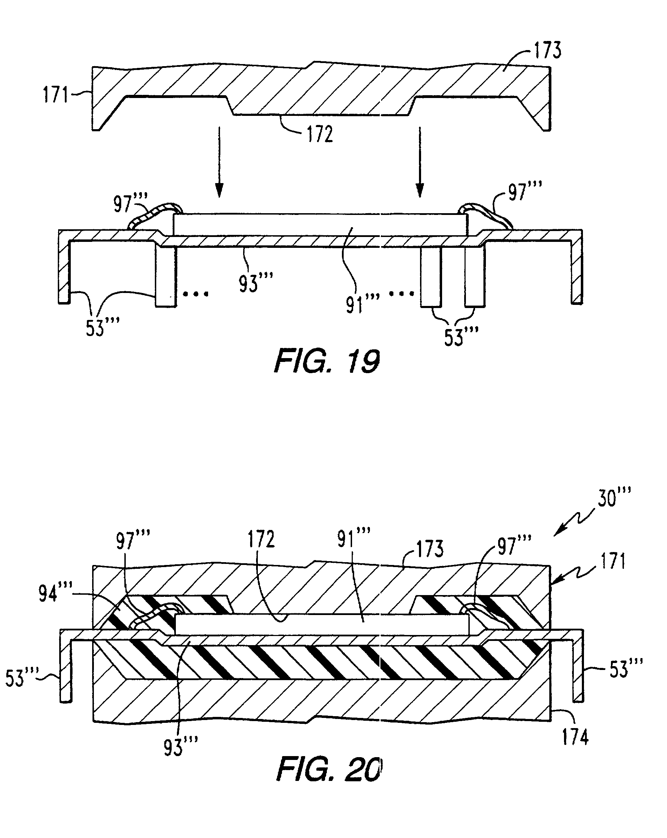

Turning now to FIGS. 19 and 20 another method in accordance with the invention for making the integrated circuit device **30"'** (FIG. 14) is now described. In this embodiment, an upper mold portion **171** includes a body **173** and a protrusion **172** extending downwardly therefrom. The upper mold portion **171** is brought together with the lower mold portion **174,** and plastic encapsulating material **94"'** is injected into thus defined mold cavity as shown in FIG. 20. The protrusion **172** may be hollow rather than solid. The other elements are indicated with a triple prime.

Provisions may be made to ensure biasing of the protrusion **172** against the integrated circuit die **91** during injection molding as would also be readily understood by those skilled in the art. The upper and lower mold portions may be parted to free the integrated circuit device **30"".**

The invention is particularly applicable to a fingerprint sensor **30** wherein direct contact with the finger of the user is performed.

The various embodiments of the fingerprint sensor **30** and its associated processing circuitry may implement any of a number of conventional fingerprint matching algorithms.

Fingerprint minutiae, that is, the branches or bifurcations and end points of the fingerprint ridges, are often used to determine a match between a sample print and a reference print database. Such minutiae matching may be readily implemented by the processing circuitry. The specification of U.S. Patent Nos. 3,859,633 and 3,893,080 are directed to fingerprint identification based upon fingerprint minutiae matching. The specification of U.S. Patent No. 4,151,512 describes a fingerprint classification method using extracted ridge contour data. The specification of U.S. Patent No. 4,185,270 discloses a process for encoding and verification also based upon minutiae. The specification of U.S. Patent No. 5,040,224 discloses an approach to preprocessing fingerprints to correctly determine a position of the core of each fingerprint image for later matching by minutiae patterns.

An integrated circuit device, including a fingerprint sensing device, having an integrated circuit die, a body of encapsulating material surrounding the integrated circuit die and having an opening therein exposing a portion of the integrated circuit die, and an electrically conductive member or frame being mounted to the body of encapsulating material adjacent the opening. The electrically conductive member is adhesively secured to the integrated circuit die. Accordingly, the adhesive and electrically conductive member may serve as a seal to the interface between the body of encapsulating material and the die. It also may define a frame that surrounds a body of removable material during an intermediate stage in manufacturing. The body of removable material and its frame may be positioned on the integrated circuit die while plastic is injection molded to encapsulate the assembly.

## Claims

1. A fingerprint sensing device (30) comprising:
an integrated circuit die (91) comprising a first fingerprint sensing portion for direct contact by a finger of a user, and a second surface portion adjacent to the first fingerprint sensing portion;
an integrally moulded body (51) of encapsulating material surrounding said integrated circuit die including the second surface portion thereof, said body of encapsulating material having an opening therein exposing the fingerprint sensing portion of said integrated circuit die adjacent to a periphery of the first fingerprint sensing portion to permit direct contact by the finger of the user with the first fingerprint sensing portion;
**characterised in that** it further comprises an electrically conductive member (54) being mounted on said body (51) of encapsulating material adjacent to the opening therein and adjacent to the first fingerprint sensing portion so that the finger of the user directly contacts the electrically conductive member as the finger is positioned onto the first fingerprint sensing portion.

2. A fingerprint sensing device according to claim 1, wherein said electrically conductive member (54) is positioned so as to define at least a portion of a frame for the opening in said body (51) of encapsulating material.

3. A fingerprint sensing device according to claim 1 or 2, wherein said electrically conductive member (54) has a closed geometric shape.

4. A fingerprint sensing device according to any one of claims 1 to 3, wherein said electrically conductive member (54) has a generally rectangular shape.

5. A fingerprint sensing device according to any one of claims 1 to 4, further comprising interconnection means (95) to said integrated circuit die (91).

6. A fingerprint sensing device according to claim 5, wherein said interconnection means comprises :
- an electrically conductive adhesive (95) between said electrically conductive member (54) and said integrated circuit die (91);
- at least one via (104) in said integrated circuit die; and
- electrically conductive material in said at least one via.

7. A fingerprint sensing device according to any one of claims 1 to 6, wherein said first fingerprint sensing portion comprises an electric field fingerprint sensor.

8. A fingerprint sensing device according to any one of claims 1 to 7, wherein said fingerprint sensing portion comprises an electric field fingerprint sensor, in which said electric field fingerprint sensor comprises :
an array of electric field sensing electrodes (30);
a dielectric layer (67) adjacent said electric field sensing electrodes, said dielectric layer for receiving a finger (19) adjacent thereto;
drive means for applying an electric field drive signal to said electric field sensing electrodes and adjacent portions of the finger so that said electric field sensing electrodes produce a fingerprint image signal.

9. A fingerprint sensing device according to any one of claims 1 to 8, further comprising voltage clamping means (108,109) operatively connected to said electrically conductive member (54) for clamping a voltage thereof.

10. A fingerprint sensing device according to any one of claims 1 to 9, further comprising electrostatic discharge means for reducing an electrostatic charge of a user as the finger of the user touches said electrically conductive member (54).

11. A fingerprint sensing device according to any one of claims 1 to 10, wherein said integrated circuit die (91) further comprises a plurality of bond pads (120), and wherein said body of encapsulating material (51) covers said plurality of bond pads.

12. A fingerprint sensing device according to claim 11, further comprising bond pad sealing means (124,126) for protecting said plurality of bond pads (120) from corrosion.

13. A fingerprint sensing device according to claim 12, wherein each of said bond pads (120) comprises a first metal layer (122), and wherein said bond pad sealing means comprises a barrier metal layer (124) on said first metal layer.

14. A fingerprint sensing device according to claim 13, wherein said bond pad sealing means further comprises a layer of gold (126) on said barrier metal layer (124).

15. A fingerprint sensing device according to any one of claims 1 to 14, wherein said integrated circuit die (91) comprises :
- a relatively rigid substrate (65); and
- a plurality of metal layers (68,71,78,80) on said substrate and being relatively rigid to provide strength to said integrated circuit die.

16. A fingerprint sensing device according to claim 15, wherein each of said plurality of metal layers (68,71,78,80) comprises a refractory metal.

17. A fingerprint sensing device according to claim 15 or 16, wherein each of said plurality of metal layers (68,71,78,80) is devoid of aluminium.

18. A fingerprint sensing device according to any one of claims 1 to 17, further comprising a lead frame (93) connected to said integrated circuit die (91).

19. A fingerprint sensing device according to any one of claims 1 to 18, wherein said electrically conductive member (54) comprises metal.

20. A fingerprint sensing device according to any one of claims 1 to 19, wherein said integrated circuit die (91) comprises an outermost passivating layer (123).

21. A fingerprint sensing device according to claim 20, wherein said outermost passivating layer (123) comprises at least one of a nitride, carbide, and diamond.

22. A fingerprint sensing device according to any one of claims 1 to 21, further comprising an adhesive layer (95) between said integrated circuit die (91) and said electrically conductive member (54).

23. A fingerprint sensing device according to any one of claims 1 to 22, wherein said body (51) of encapsulating material comprises plastic.

24. A fingerprint sensing device according to any one of claims 1 to 23, wherein said body on encapsulating material comprises injection moulded plastic.

25. A fingerprint sensing device according to any one of claims 1 to 24, further comprising locking means defined at an interface between said electrically conductive member (54) and said body (51) of encapsulating material for forming a mechanical lock therebetween.

26. A fingerprint sensing device according to any one of claims 1 to 25, further comprising corrosion sensing means (135) for sensing corrosion of said integrated circuit die (91).

27. A method of making a fingerprint sensing device (30) comprising the steps of :
- providing an integrated circuit die (91) comprising a first fingerprint sensing portion for direct contact by a finger of a user, and a second surface portion adjacent the first fingerprint sensing portion;
- forming an integrally moulded body (51) of encapsulating material to surround said integrated circuit die including the second surface portion thereof, said body of encapsulating material being formed with an opening therein exposing the fingerprint sensing portion of said integrated circuit die adjacent to a periphery of the second surface portion to permit direct contact by the finger of the user with the first fingerprint sensing portion;
**characterised in that** it further comprises the steps of :
- forming an electrically conductive member (54) on said body (51) of encapsulating material adjacent to the opening therein and adjacent to the first fingerprint sensing portion so that the finger of the user directly contacts the electrically conductive member as the finger is positioned onto the first fingerprint sensing portion;
and **in that** said integrally moulded body (51) is formed by :
- positioning a body of removable material (151) on the integrated circuit die (91);
- forming a body of encapsulating material around the integrated circuit die and the body of removable material; and
- removing the body of removable material to define an opening through the body of encapsulating material to expose a portion of the integrated circuit die.

28. Method according to claim 27, wherein the body of removable material (151) is removed while the electrically conductive member (54) remains in place with the body of endapsulating material (51), the step of positioning the body of removable material comprising the step of adhesively securing the electrically conductive member to the integrated circuit die (91), and the step of securing the member comprises the step of securing the member completely around a periphery of the body of removable material, including the step of forming the body of encapsulating material comprises injection molding plastic around the body of removable material and the integrated circuit die, and the step of providing the body of material soluble in liquid; and the step of removing comprising exposing the body of material soluble in liquid to liquid.

29. Method according to any one of claims 27 or 28, including the steps of securing an electrically conductive member (95) to the body of removable material (151); positioning the body of removable material and electrically conductive member on the integrated circuit die (91);
forming the body of encapsulating material around the integrated circuit die, and the body of removable material and electrically conductive member; and
removing the body of removable material to define an opening through the body of encapsulating material to expose a portion of the integrated circuit die and while the electrically conductive member remains in place with the body of encapsulating material, and providing the integrated circuit die comprising the sensor portion constituted by the fingerprint sensor to be exposed through the opening in the body of encapsulating material.

## Patentansprüche

1. Fingerabdruck-Erfassungseinrichtung (30) mit
einem integrierten Schaltkreis-Chip (91), der einen ersten Fingerabdruck-Erfassungsabschnitt für den direkten Kontakt mit einem Finger eines Benutzers und einen zweiten Oberflächenabschnitt benachbart dem ersten Fingerabdruck-Erfassungsabschnitt aufweist;
einem integriert geformten Körper (51) aus einem Verkapselungs-Material, das den integrierten Schaltkreis-Chip einschließlich dessen zweiten Oberflächenabschnitt umgibt, wobei der Körper aus dem Verkapselungs-Material eine Öffnung aufweist, welche den Fingerabdruck-Erfassungsabschnitt des integrierten Schaltkreis-Chips benachbart einem Umfang des ersten Fingerabdruck-Erfassungsabschnitts freigibt, um einen direkten Kontakt zwischen dem Finger des Benutzers und dem ersten Fingerabdruck-Erfassungsabschnitt zu ermöglichen;
**dadurch gekennzeichnet, daß** es ein elektrisch leitendes Bauteil (54) aufweist, das an dem Körper (51) aus dem Verkapselungs-Material benachbart der darin ausgebildeten Öffnung und benachbart dem ersten Finerabdruck-Erfassungsabschnitt angebracht ist, so daß der Finger des Benutzers das elektrisch leitende Bauteil direkt kontaktiert, wenn der Finger auf den ersten Fingerabdruck-Erfassungsabschnitt positioniert wird.

2. Fingerabdruck-Erfassungseinrichtung nach Anspruch 1, wobei das elektrisch leitende Bauteil (54) so angeordnet ist, daß wenigstens ein Teil eines Rahmens für die Öffnung in dem Körper (51) aus dem Verkapselungs-Material definiert ist.

3. Fingerabdruck-Erfassungseinrichtung nach Anspruch 1 oder 2, wobei das elektrisch leitende Bauteil (51) eine geschlossene geometrische Form hat.

4. Fingerabdruck-Erfassungseinrichtung nach einem der Ansprüche 1 bis 3, wobei das elektrisch leitende Bauteil (54) eine im wesentlichen rechteckige Form hat.

5. Fingerabdruck-Erfassungseinrichtung nach einem der Ansprüche 1 bis 4, mit einer Verbindungseinrichtung (95) zu dem integrierten Schaltkreis-Chip (91).

6. Fingerabdruck-Erfassungseinrichtung nach Anspruch 5, wobei die Verbindungseinrichtung folgende Merkmale aufweist:
ein elektrisch leitender Klebstoff (95) zwischen dem elektrisch leitenden Bauteil (54) und dem integrierten Schaltkreis-Chip (91);
wenigstens einen Durchgang (104) in dem integrierten Schaltkreis-Chip; und
elektrisch leitendes Material in dem wenigstens einen Durchgang.

7. Fingerabdruck-Erfassungseinrichtung nach einem der Ansprüche 1 bis 6, wobei der erste Fingerabdruck-Erfassungsabschnitt eine Fingerabdrucksensor des elektrischen Feldes aufweist.

8. Fingerabdruck-Erfassungseinrichtung nach einem der Ansprüche 1 bis 7, wobei der Fingerabdruck-Erfassungsabschnitt einen Fingerabdrucksensor des elektrischen Feldes aufweist, wobei der Fingerabdrucksensor des elektrischen Feldes folgende Merkmale aufweist:
eine Anordnung aus Elektroden (3) zur Erfassung eines elektrischen Feldes;
eine dielektrische Schicht (67) benachbart der Elektroden zur Erfassung des elektrischen Feldes, wobei die dielektrische Schicht einen Finger (19) in ihrer Nähe empfängt;
eine Ansteuereinrichtung zum Anlegen eines elektrischen Feld-Ansteuersignals an die Elektroden zum Erfassen des elektrischen Feldes und benachbarte Teile des Fingers, so daß die Elektroden zum Erfassen des elektrischen Feldes ein Fingerabdruck-Bildsignal erzeugen.

9. Fingerabdruck-Erfassungseinrichtung nach einem der Ansprüche 1 bis 8, mit einer Spannungsklemmeinrichtung (108, 109), die mit dem elektrisch leitenden Bauteil (54) betrieblich gekoppelt ist, um eine Spannung dieses Bauteils zu klemmen.

10. Fingerabdruck-Erfassungseinrichtung nach einem der Ansprüche 1 bis 9, mit einer elektrostatischen Entladevorrichtung zum Reduzieren einer elektrischen Ladung eines Benutzers, wenn der Finger des Benutzers das elektrisch leitende Bauteil (54) berührt.

11. Fingerabdruck-Erfassungseinrichtung nach einem der Ansprüche 1 bis 10, wobei der integrierte Schaltkreis-Chip (91) ferner mehrere Bondfelder (120) aufweist, wobei der Körper des Verkappselungs-Materials (51) die mehreren Bondfelder bedeckt.

12. Fingerabdruck-Erfassungseinrichtung nach Anspruch 11, mit einer Bondfeld-Versiegelungseinrichtung (124,126) zum Schützen der mehreren Bondfelder (120) gegen Korrosion.

13. Fingerabdruck-Erfassungseinrichtung nach Anspruch 12, wobei jedes der Bondfelder (120) eine erste Metallschicht (122) aufweist und wobei die Bondfeld-Versiegelungseinrichtung eine Sperrmetallschicht (124) auf der ersten Metallschicht umfasst.

14. Fingerabdruck-Erfassunseinrichtung nach Anspruch 13, wobei die Bondfelder-Versiegelungseinrichtung ferner eine Goldschicht (126) auf der Sperrmetallschicht (124) aufweist.

15. Fingerabdruck-Erfassungseinrichtung nach einem der Ansprüche 1 bis 14, wobei der integrierte Schaltkreis-Chip (91) folgende Merkmale aufweist:
ein relativ starres Substrat (65); und
mehrere Metallschichten (68, 71, 70,80) auf dem Substrat, die relativ starr sind, um dem integrierten Schaltkreis-Chip Festigkeit zu verleihen.

16. Fingerabdruck-Erfassungseinrichtung nach Anspruch 14, wobei jeder der mehreren Metallschichten (68, 71, 78, 80) ein feuerfestes Metall umfaßt.

17. Fingerabdruck-Erfassungseinrichtung nach Anspruch 15 oder 16, wobei jede der mehrerer Metallschichten (68, 71, 78, 80) kein Aluminium enthält.

18. Fingerabdruck-Erfassungseinrichtung nach einem der Ansprüche 1 bis 17, mit einem Anschlußrahmen (93), der mit dem integrierten Schaltkreis-Chip (91) verbunden ist.

19. Fingerabdruck-Erfassungseinrichtung nach einem der Ansprüche 1 bis 18, wobei das elektrisch leitende Bauteil (54) Metall aufweist.

20. Fingerabdruck-Erfassungseinrichtung nach einem der Ansprüche 1 bis 19, wobei der integrierte Schaltkreis-Chip (91) eine außen gelegene Passivierungsschicht (123) aufweist.

21. Fingerabdruck-Erfassungseinrichtung nach Anspruch 20, wobei die äußere Passivierungsschicht (123) wenigstens Nitrit, Karbid oder Diamant aufweist.

22. Fingerabdruck-Erfassunseinrichtung nach einem der Ansprüche 1 bis 21, mit einer Haftschicht (95) zwischen dem integrierten Schaltkreis-Chip (91) und dem elektrisch leitenden Bauteil (54).

23. Fingerabdruck-Erfassungseinrichtung nach einem der Ansprüche 1 bis 22, wobei der Körper (59) aus dem Verkapselungs-Material Kunststoff umfaßt.

24. Fingerabdruck-Erfassungseinrichtung nach einem der Ansprüche 1 bis 23, wobei der Körper aus dem Verkapselungs-Material einen Spritzguß-Kunststoff umfaßt.

25. Fingerabdruck-Erfassungseinrichtung nach einem der Ansprüche 1 bis 24, mit einer Verriegelungseinrichtung, die an einer Grenzfläche zwischen dem elektrisch leitenden Bauteil (54) und dem Körper (51) aus dem Verkapselungs-Material liegt, um eine mechanische Verriegelung zwischen diesen bilden.

26. Fingerabdruck-Erfassungseinrichtung nach einem der Ansprüche 1 bis 25, mit einer Korrosions-Erfassungseinrichtung (135) zum Erfassen von Korrosion des integrierten Schaltkreis-Chips (91).

27. Verfahren zum Herstellen einer Fingerabdruck-Erfassungseinrichtung (30), mit folgenden Verfahrensschritten:
Vorsehen eines integrierten Schaltkreis-Chips (91), der einen ersten Fingerabdruck-Erfassungsabschnitt für den direkten Kontakt mit dem Finger eines Benutzers und einen zweiten Oberflächenabschnitt benachbart dem ersten Fingerabdruck-Erfassungsabschnitt aufweist;
Ausbilden eines integriert geformten Körpers (51) aus einem Verkapselungs-Material, um den integrierten Schaltkreis-Chip einschließlich dessen zweiten Oberflächenabschnitt zu umgeben, wobei der Körper aus dem Verkapselungs-Material eine Öffnung ausweist, welche den Fingerabdruck-Erfassungsabschnitt des integrierten Schaltkreis-Chips benachbart einem Umfang des zweiten Oberflächenabschnitts freigibt, um einen direkten Kontakt zu dem Finger des Benutzers und dem Fingerabdruck-Erfassungsabschnitt zu ermöglichen;
**gekennzeichnet durch** die weiteren Verfahrensschritte:
Positionieren eines Körpers aus entfernbarem Material (151) auf dem integrierten Schaltkreis-Chip (91);
Ausbilden eines Körpers aus Verkapselungs-Material um den integrierten Schaltkreis-Chip und Körper aus dem entfernbaren Material; und
Entfernen des Körpers aus dem entfernbaren Material, um eine Öffnung **durch** den Körper aus dem Verkapselungs-Material zu definieren, um einen Teil des integrierten Schaltkreis-Chips freizulegen.

28. Verfahren nach Anspruch 27, wobei der Körper aus dem entfernbaren Material (151) entfernt wird, während das elektrisch leitende Bauteil (54) mit dem Körper aus dem Verkapselungs-Material (51) in seiner Position bleibt, wobei der Schritt des Positionierens des Körpers aus dem entfernbaren Material eine Haftverbindung des elektrisch leitenden Bauteils mit dem integrierten Schaltkreis-Chip (91) umfaßt und der Schritt des Verbindens des Bauteil das Befestigen des Bauteils vollständig um einen Umfang des Körpers aus entfernbarem Material umfaßt, wobei der Schritt des Ausbildens des Körpers aus Verkapselungs-Material die Spritzgußformung von Kunststoff um den Körper aus entfernbarem Material und den integrierten Schaltkreis-Chip und das Vorsehen des Körpers aus einem in Flüssigkeit lösbaren Material umfaßt; und der Schritt des Entfernens ein Schritt umfaßt, bei dem der Körper aus in Flüssigkeit lösbarem Material Flüssigkeit ausgesetzt wird.

29. Verfahren nach einem der Ansprüche 27 oder 28, mit den weiteren Verfahrensschritten:
Befestigen eines elektrisch leitenden Bauteils (95) an dem Körper aus entfernbarem Material;
Positionieren des Körpers aus entfernbarem Material und des elektrisch leitenden Bauteils auf dem integrierten Schaltkreis-Chip (91);
Ausbilden des Körpers aus Verkapselungs-Material um den integrierten Schaltkreis-Chip und den Körper aus entfernbarem Material und das elektrisch leitende Bauteil;
Entfernen des Körpers aus entfernbarem Material, um eine Öffnung durch den Körper aus Verkapselungs-Material zu definieren, um einen Teil des integrierten Schaltkreis-Chips freizulegen, während das elektrisch leitende Bauteil mit dem Körper aus Verkapselungs-Material in seiner Position bleibt, wobei der integrierte Schaltkreis-Chip mit dem Sensorabschnitt vorgesehen wird, der durch den Fingerabdruck-Sensor gebildet wird, der durch die Öffnung in dem Körper aus Verkapselungs-Material frei zugänglich ist.

## Revendications

1. Dispositif de détection d'empreintes digitales (30) comprenant :
une puce de circuit intégré (91) comprenant une première zone de détection d'empreintes digitales pour un contact direct avec le doigt d'un utilisateur, et une seconde zone superficielle adjacente à la première zone de détection d'empreintes digitales ;
un corps intégralement moulé (51) de matériau d'enrobage entourant ladite puce de circuit intégré y compris la seconde zone superficielle de celle-ci, ledit corps de matériau d'enrobage possédant une ouverture à l'intérieur exposant la zone de détection d'empreintes digitales de ladite puce de circuit intégré adjacente à une périphérie de la première zone de détection d'empreintes digitales pour permettre un contact direct entre le doigt de l'utilisateur et la première zone de détection d'empreintes digitales ;
**caractérisé en ce qu'**il comprend également un élément conducteur (54) monté sur ledit corps (51) de matériau d'enrobage adjacent à l'ouverture à l'intérieur et adjacent à la première zone de détection d'empreintes digitales de sorte que le doigt de l'utilisateur est directement au contact de l'élément conducteur lorsque le doigt est placé sur la première zone de détection d'empreintes digitales.

2. Dispositif de détection d'empreintes digitales selon la revendication 1, dans lequel ledit élément conducteur (54) est positionné de façon à définir au moins une partie d'un cadre pour l'ouverture pratiquée dans ledit corps (51) de matériau d'enrobage.

3. Dispositif de détection d'empreintes digitales selon la revendication 1 ou 2, dans lequel ledit élément conducteur (54) a une forme géométrique fermée.

4. Dispositif de détection d'empreintes digitales selon l'une quelconque des revendications 1 à 3, dans lequel ledit élément conducteur (54) possède une forme généralement rectangulaire.

5. Dispositif de détection d'empreintes digitales selon l'une quelconque des revendications 1 à 4, comprenant également un système d'interconnexion (95) à ladite puce de circuit intégré (91).

6. Dispositif de détection d'empreintes digitales selon la revendication 5, dans lequel ledit système d'interconnexion comprend :
- un adhésif conducteur (95) entre ledit élément conducteur (54) et ladite puce de circuit intégré (91) ;
- au moins un trou d'interconnexion (104) dans ladite puce de circuit intégré ; et
- un matériau conducteur dans ledit trou d'interconnexion.

7. Dispositif de détection d'empreintes digitales selon l'une quelconque des revendications 1 à 6, dans lequel ladite première zone de détection d'empreintes digitales comprend un capteur d'empreintes digitales par champ électrique.

8. Dispositif de détection d'empreintes digitales selon l'une quelconque des revendications 1 à 7, dans lequel ladite zone de détection d'empreintes digitales comprend un capteur d'empreintes digitales par champ électrique, dans lequel ledit capteur d'empreintes digitales par champ électrique comprend :
un réseau d'électrodes de détection de champ électrique (30) ;
une couche diélectrique (67) adjacente auxdites électrodes de détection de champ électrique, ladite couche diélectrique étant destinée à recevoir un doigt (19) adjacent à celle-ci ;
un système d'amplification pour appliquer un signal d'amplification de champ électrique auxdites électrodes de détection de champ électrique et aux parties adjacentes du doigt de façon à ce que lesdites électrodes de détection de champ électrique produisent un signal d'image d'empreintes digitales.

9. Dispositif de détection d'empreintes digitales selon l'une quelconque des revendications 1 à 8, comprenant également un système d'écrêtage de tension (108,109) raccordé de manière opérationnelle audit élément conducteur (54) pour écrêter une tension de celui-ci.

10. Dispositif de détection d'empreintes digitales selon l'une quelconque des revendications 1 à 9, comprenant également un système de décharge électrostatique destiné à réduire la charge électrostatique d'un utilisateur au moment où le doigt de l'utilisateur touche ledit élément conducteur (54).

11. Dispositif de détection d'empreintes digitales selon l'une quelconque des revendications 1 à 10, dans lequel ladite puce de circuit intégré (91) comprend également plusieurs plots de connexion (120), et dans lequel ledit matériau d'enrobage (51) recouvre lesdits plots de connexion.

12. Dispositif de détection d'empreintes digitales selon la revendication 11, comprenant également un système d'étanchéité des plots de connexion (124, 126) pour protéger lesdits plots de connexion (120) de la corrosion.

13. Dispositif de détection d'empreintes digitales selon la revendication 12, dans lequel chacun desdits plots de connexion (120) comprend une première couche métallique (122) et dans lequel ledit système d'étanchéité des plots de connexion comprend une couche métallique d'arrêt (124) sur ladite première couché métallique.

14. Dispositif de détection d'empreintes digitales selon la revendication 13, dans lequel ledit système d'étanchéité des plots de connexion comprend également une couche d'or (126) sur ladite couche métallique d'arrêt (124).

15. Dispositif de détection d'empreintes digitales selon l'une quelconque des revendications 1 à 14, dans lequel ladite puce de circuit intégré (91) comprend :
- un substrat relativement rigide (65) ; et
- plusieurs couches métalliques (68, 71, 78, 80) sur ledit substrat qui sont relativement rigides pour donner de la solidité à ladite puce de circuit intégré.

16. Dispositif de détection d'empreintes digitales selon la revendication 15, dans lequel chacune des couches métalliques (68, 71, 78, 80) comprend un métal réfractaire.

17. Dispositif de détection d'empreintes digitales selon la revendication 15 ou 16, dans lequel chacune des couches métalliques (68, 71, 78, 80) est dépourvue d'aluminium.

18. Dispositif de détection d'empreintes digitales selon l'une quelconque des revendications 1 à 17, comprenant également une grille de connexion (93) raccordée à ladite puce de circuit intégré (91).

19. Dispositif de détection d'empreintes digitales selon l'une quelconque des revendications 1 à 18, dans lequel ledit élément conducteur (54) comprend du métal.

20. Dispositif de détection d'empreintes digitales selon l'une quelconque des revendications 1 à 19, dans lequel ladite puce de circuit intégré (91) comprend une couche de passivation extérieure (123).

21. Dispositif de détection d'empreintes digitales selon la revendication 20, dans lequel ladite couche de passivation extérieure (123) comprend au moins un nitrure, un carbure et du diamant.

22. Dispositif de détection d'empreintes digitales selon l'une quelconque des revendications 1 à 21, comprenant également une couche adhésive (95) entre ladite puce de circuit intégré (91) et ledit élément conducteur (54).

23. Dispositif de détection d'empreintes digitales selon l'une quelconque des revendications 1 à 22, dans lequel ledit corps (51) de matériau d'enrobage comprend du plastique.

24. Dispositif de détection d'empreintes digitales selon l'une quelconque des revendications 1 à 23, dans lequel ledit corps de matériau d'enrobage comprend du plastique moulé par injection.

25. Dispositif de détection d'empreintes digitales selon l'une quelconque des revendications 1 à 24, comprenant également un système de verrouillage défini à une interface entre ledit élément conducteur (54) et ledit corps (51) de matériau d'enrobage pour former un verrouillage mécanique entre eux.

26. Dispositif de détection d'empreintes digitales selon l'une quelconque des revendications 1 à 25, comprenant également un système de détection de la corrosion (135) pour détecter la corrosion de ladite puce de circuit intégré (91).

27. Procédé de fabrication d'un dispositif de détection d'empreintes digitales (30) comprenant les étapes de :
- fourniture d'une puce de circuit intégré (91) comprenant une première zone de détection d'empreintes digitales pour un contact direct avec le doigt d'un utilisateur, et une seconde zone superficielle adjacente à la première zone de détection d'empreintes digitales ;
- formation d'un corps intégralement moulé (51) de matériau d'enrobage pour entourer ladite puce de circuit intégré y compris la seconde zone superficielle de celle-ci, ledit corps de matériau d'enrobage étant formé avec une ouverture à l'intérieur exposant la zone de détection d'empreintes digitales de ladite puce de circuit intégré adjacente à une périphérie de la seconde zone superficielle pour permettre un contact direct entre le doigt de l'utilisateur et la première zone de détection d'empreintes digitales ;
**caractérisé en ce qu'**il comprend également les étapes consistant à :
- former un élément conducteur (54) sur ledit corps (51) de matériau d'enrobage adjacent à l'ouverture à l'intérieur et adjacent à la première zone de détection d'empreintes digitales de sorte que le doigt de l'utilisateur est directement au contact de l'élément conducteur lorsque le doigt est placé sur la première zone de détection d'empreintes digitales ;
et **en ce que** ledit corps intégralement moulé (51) est formé en :
- positionnant un corps de matériau amovible (151) sur la puce de circuit intégré (91) ;
- formant un corps de matériau d'enrobage autour de la puce de circuit intégré et du corps de matériau amovible ; et
- en enlevant le corps de matériau amovible pour définir une ouverture à travers le corps de matériau d'enrobage pour exposer une partie de la puce de circuit intégré.

28. Procédé selon la revendication 27, dans lequel le corps de matériau amovible (151) est enlevé alors que l'élément conducteur (54) reste en place avec le corps de matériau d'enrobage (51), l'étape de positionnement du corps de matériau amovible comprenant l'étape de fixation à l'aide d'un adhésif de l'élément conducteur sur la puce de circuit intégré (91), et l'étape de fixation de l'élément comprend l'étape de fixation de l'élément entièrement autour d'une périphérie du corps de matériau amovible, comprenant l'étape de formation du corps de matériau d'enrobage comprend l'injection d'un plastique de moulage autour du corps de matériau amovible et de la puce de circuit intégré, et l'étape de fourniture du corps de matériau soluble dans le liquide ; et l'étape d'enlèvement comprenant l'exposition du corps de matériau soluble dans le liquide à un liquide.

29. Procédé selon l'une quelconque des revendications 27 ou 28, comprenant les étapes de fixation d'un élément conducteur (95) sur le corps de matériau amovible (151) ; en positionnant le corps de matériau amovible et l'élément conducteur sur la puce de circuit intégré (91) ;
en formant le corps de matériau d'enrobage autour de la puce de circuit intégré, et du corps de matériau amovible et de l'élément conducteur ; et
en enlevant le corps de matériau amovible pour définir une ouverture à travers le corps de matériau d'enrobage pour exposer une partie de la puce de circuit intégré alors que l'élément conducteur reste en place avec le corps de matériau d'enrobage, et en fournissant la puce de circuit intégré comprenant la zone de détection constituée par le capteur d'empreintes digitales qui va être exposée à travers l'ouverture pratiquée dans le corps du matériau d'enrobage.
